# EUROPÄISCHE PATENTSCHRIFT

(11) **EP 1 918 596 B1**
(45) Veröffentlichungstag und Bekanntmachung des Hinweises auf die Patenterteilung: **21.03.2012**
(21) Anmeldenummer: 06024927.3
(22) Anmeldetag: 01.12.2006
(51) Int. Cl.: F16B 37/06

(54) **Blindnietelement sowie Verwendung hierfür**
Blind rivet and use thereof
Rivet aveugle et son utilisation

(30) Priorität: 03.11.2006 EP 06022882
(43) Veröffentlichungstag der Anmeldung: 07.05.2008
(73) Patentinhaber: Schruff, Herbert, 65375 Oestrich-Winkel (DE)
(72) Erfinder: Schruff, Herbert, 65375 Oestrich-Winkel (DE)
(74) Vertreter: Quermann, Helmut

(56) Entgegenhaltungen:
- EP-A- 0 333 138
- EP-A- 1 447 576
- EP-A2- 1 557 577
- FR-A- 2 073 978
- US-A- 1 881 973
- US-A- 2 324 142
- US-A- 2 384 347
- US-A- 5 191 991

## Beschreibung

Die Erfindung betrifft ein Blindnietelement mit einem Setzkopf und einem Schaft, wobei der Schaft im Bereich seines dem Setzkopf abgewandten Endes ein Innengewinde oder eine Aufnahme für einen Gewindebolzen und zwischen dem Innengewinde bzw. der Aufnahme für den Gewindebolzen und dem Setzkopf einen Verformungsabschnitt aufweist, sowie der Setzkopf einen größeren Außendurchmesser als der Schaft besitzt. Die Erfindung betrifft ferner eine neue Verwendung eines Blindnietelements.

Derartige Blindnietelemente sind beispielsweise als Blindnietmutter oder Blindnietgewindebolzen ausgebildet.

Blindnietelemente haben sich für Befestigungsaufgaben bewährt, bei denen eine Schraubverbindung im Bereich dünnwandiger Materialien, beispielsweise Blechen, erforderlich ist, in die normalerweise kein Gewinde geschnitten werden kann.

Blindnietelemente bilden den Gegenflansch - Schließkopf - durch Wulstbildung, also eine Materialfalte. Je geringer die Materialstärke eines dünnwandigen Gegenstandes, insbesondere Bleches ist, mit dem das Blindnietelement definierter Abmessung zu verbinden ist, desto größer ist der Außendurchmesser des Wulstes.

Ist das Blindnietelement beispielsweise als Blindnietmutter ausgebildet, wird dieses in dem Blech befestigt und stellt nach ihrer Befestigung ein Gewinde für eine Schraubverbindung zur Verfügung. Das Setzen der Blindnietmutter erfolgt normalerweise so, dass die Blindnietmutter zunächst in ein vorgefertigtes Loch des Bleches platziert wird und dann mit einem geeigneten Werkzeug, welches einen rotierbaren und axial verschiebbaren Gewindedorn aufweist, vernietet wird. Hierzu wird der Gewindedorn von der Setzkopfseite her in das Innengewinde der Blindnietmutter geschraubt und dann axial so verschoben, dass eine Stauchung des Verformungsabschnitts erfolgt und sich somit zwischen dem Gewindeanfang und der Unterseite des Bleches ein Gegenflansch - also ein Schließkopf bildet. Der Schließkopf verankert zusammen mit dem Setzkopf die Blindnietmutter im Blech. Anschließend wird der Gewindedorn ausgeschraubt. Die Blindnietmutter steht dann als Aufnahme für eine Befestigungsschraube zur Verfügung. Ist das Blindnietelement beispielsweise als Blindnietgewindebolzen ausgebildet, weist der Schaft im Bereich seines dem Setzkopf abgewandten Endes eine Aufnahme für einen Gewindebolzen auf, der in aller Regel mit der Aufnahme verschweißt ist. Das Setzen des Blindnietgewindebolzen erfolgt entsprechend dem Setzen der Blindnietmutter, mit dem Unterschied, dass unmittelbar am Gewindebolzen gezogen wird.

Bei den herkömmlichen Blindnietmuttern einfachster Bauart, wie sie beispielsweise in der DE 198 08 685 A1 beschrieben sind und Blindnietelemente der eingangs genannten Art darstellen, ist der Bereich im Verformungsabschnitt, wo der Schließkopf beginnt sich zu formen, nicht definiert sondern abhängig von der Montageanordnung, die zusätzlich noch bestimmte Vorraussetzungen fordert. Herkömmliche Blindnietmuttern können z. B. nur in Material von relativ hoher Festigkeit - vorzugsweise Metallen - vernietet werden.

Der Schließkopf bildet sich bei diesen Blindnietmuttern, dem geringeren Widerstand entsprechend, auf halber Distanz zwischen dem Bereich des Verformungsabschnitts, wo dieser auf der dem Setzkopf abgewandten Seite aus dem Bohrloch austritt, und dem Beginn des wesentlichen dickwandigeren Gewindeabschnitts. Bei nicht ausreichend festem Material, wie z. B. Plastik oder der sogenannten Sandwichbauweise oder dergleichen, wird die Schließkopfbildung undefinierbar, mit der Folge, dass die Blindnietmutter nicht fest sitzt, gegebenenfalls zur Seite knickt oder gar der nach außen zu bildende Wulst sich nach innen faltet und das Ausschrauben des Gewindedorns behindert bzw. diesen beschädigt. Die nicht definierte Schließkopfbildung hat auch zur Folge, dass herkömmliche Blindnietmuttern nur einen sehr begrenzten Klemmbereich haben - also der Bereich unterschiedlicher Materialstärken, innerhalb welcher eine Blindnietmutter bei gleicher Länge des Verformungsabschnitts verwendet werden kann - mit allen sich hieraus ergebenden Nachteilen. So haben z. B. Blindnietmuttern, die der Aufnahme einer Schraube der Größe M8 dienen, einen Klemmbereich von lediglich 2,5 mm und müssen in verschiedenen Bereichsgrößen hergestellt werden, 0.5 bis 3.0 mm, 3.0 bis 5.5 mm usw.

Ein Blindnietelement der eingangs genannten Art, wobei das Blindnietelement als Blindnietmutter ausgebildet ist, ist ferner aus der US-A-3,789,728 bekannt. Bei dieser weist der Schaft im Bereich seines Verformungsabschnittes einen gestuften Innendurchmesser bei konstantem Außendurchmesser auf. Der Bereich des Verformungsabschnittes, der dem Setzkopf zugewandt ist, weist eine geringere Wandstärke auf als der Bereich des Schaftes, der dem Innengewinde zugewandt ist. Bei dieser Blindnietmutter sind zusätzlich vier sich parallel zur Längsachse des Schaftes erstreckende Schlitze vorgesehen, die den Schaft durchsetzen und sich in der einen Richtung bis zum Innengewinde und in der entgegengesetzten Richtung bis zu einem solchen Abstand vom Setzkopf erstrecken, der in etwa der Wandstärke des unter Berücksichtigung des Klemmbereiches dieser Blindnietmutter dünnwandigsten Bleches entspricht.

Diese Blindnietmutter hat die Aufgabe, auf der rückwärtigen Seite des Bleches eine vom Zentrum des Loches im Blech möglichst weit entfernte Auflage zu erreichen, um in relativ dünnem und somit labilen Material eine Deformierung desselben zu vermeiden, was bei Belastung zum Ausknöpfen führt bzw. führen kann. Hierdurch ergibt sich gleichzeitig ein großer Klemmbereich, der aber durch hohe Fertigungskosten - etwa dem dreifachen gegenüber herkömmlichen Blindnietmuttern - erzielt wird. So ist diese Blindnietmutter sehr lang, benötigt somit mehr Material. Dies schlägt sich auch auf die Maschinenkosten nieder. Zusätzlich ist das Einbringen der Schlitze außerordentlich teuer, da die Herstellung solcher Blindnietmuttern in aller Regel im Fließprozess erfolgt, mit einhergehenden erheblichen Kosten für die Presse und den Presswerkzeugen zum Pressen der langen Blindnietmutter. Wird diese Blindnietmutter nicht ihrem Zweck entsprechend, sondern nur zum Erreichen eines großen Klemmbereichs eingesetzt, so besteht die Gefahr, dass sie sich wegen der Schlitze und der damit beim Nieten entstehenden Rosette nur schlecht im Blech verklemmt. So werden beim Setzen der Blindnietmutter die zwischen den vier Schlitzen befindlichen Stege in ihren freien Bereichen, somit dort, wo sich kein Blech befindet, radial nach außen verformt, bis die Schenkel dieser Bereiche der Stege aufeinander liegen. Demzufolge ist die Radialerstreckung der verformten Abschnitte der Blindnietmutter sehr groß, mit der Konsequenz, dass sich deren radial äußere Auflage am Blech sehr weit von der Längsachse des Schaftes befindet. Wegen der großen Knicklänge des jeweiligen Steges und den Schlitzen ergibt sich kein eindeutiger Bereich des Schaftes, in dem die Verformung der Stege beginnt, bezogen auf ein identisches Stärkenmaß des Bleches. Bei dieser Blindnietmutter ist von besonders großem Nachteil, dass sie auf Grund ihrer Länge einen tiefen Bauraum hinter dem Blech erfordert, der oftmals nicht vorhanden ist. Demzufolge ist eine solche Blindnietmutter in solchen Fällen nicht einsetzbar. Selbst dann, wenn man im Bereich der Schlitze, etwa auf halber Länge des jeweiligen Schlitzes, weitere Schwächungen der Schaftwandung vornehmen würde und damit eine gezielte Verformung des Schaftes darstellbar wäre, hätte eine solche Blindnietmutter nach wie vor den Nachteil der großen Länge und damit des eingeschränkten Einsatzbereiches, abgesehen von den noch höheren Fertigungskosten.

Eine Blindnietmutter, die ähnlich derjenigen gemäß der US-A 3,789,728 gestaltet ist, ist aus der US 1,881, 973 bekannt. Dort ist auf halber Länge der in Längsrichtung angeordneten Schlitze, die den Schaft durchsetzen, jeweils eine erweiterte Öffnung angeordnet, die dem Zweck dient, Schwachstellen im Schaft zu bilden, so dass von diesem Ort aus das Knicken des Schafts erfolgt. Wegen der in Längsrichtung des Schafts angeordneten Schlitze weist diese Blindnietmutter dieselben umfangreichen Nachteile auf, wie Sie vorstehend zu Blindnietmuttern mit Schlitzen beschrieben sind.

Eine weitere Blindnietmutter ist aus der US-A-5,259,714 bekannt. Bei dieser erstrecken sich gleichfalls vier parallel zur Längsachse des Schaftes angeordnete Schlitze über die gesamte Länge des Verformungsabschnitts. Ein gestufter Durchmesser im Bereich des Verformungsabschnitts ist bei dieser Blindnietmutter nicht vorgesehen. Diese Konstruktion hat dieselben hohen Fertigungskosten wie die Blindnietmutter gemäß der US-A-3,789,728. Sie erlaubt zwar einen erweiterten Klemmbereich, weist aber ansonsten die gleichen Probleme auf, wie herkömmliche Blindnietmuttern. Auch bei dieser Blindnietmutter findet eine Verformung der zwischen den vier Schlitzen befindlichen Stege wegen der großen Knicklänge der Stege nicht an einer definierten Stelle des Verformungsabschnitts statt. Bei einer zufälligen Verformung besteht die Gefahr einer unzureichenden Befestigung der Blindnietmutter.

Eine Blindnietmutter, bei der sich sechs parallel zur Längsachse des Schaftes angeordnete Schlitze im Wesentlichen über die gesamte Länge des Verformungsabschnitts erstrecken, ist aus der US-A-2,384,347 bekannt. Auch bei dieser Blindnietmutter findet eine Verformung der zwischen den Schlitzen befindlichen Stege wegen der großen Knicklänge der Stege nicht an einer definierten Stelle des Verformungsabschnitts statt. Bei einer zufälligen - also nicht deformierten - Verformung entscheidet die Montageanordnung beim Verarbeiter über die Wulstbildung und kann nur durch Probenietungen genau ermittelt werden.

Aus der US-A-5,051,048 ist eine Blindnietmutter bekannt, die einen Setzkopf und einen Schaft aufweist, wobei der einen konstanten Außendurchmesser besitzende Schaft im Bereich seines dem Setzkopf abgewandten Endes ein Innengewinde und zwischen dem Innengewinde und dem Setzkopf einen Verformungsabschnitt aufweist. Der Schaft besitzt zwischen dem Innengewinde des Schaftes und dem Setzkopf zwei Schaftabschnitte, wobei der eine, dem Setzkopf zugewandte Schaftabschnitt einen konstanten Innendurchmesser aufweist und dieser Abschnitt relativ dünnwandig ausgebildet ist, während der sich an diesen Schaftabschnitt anschließende Schaftabschnitt einen sich in Richtung des Innengewindes konisch verjüngenden Innendurchmesser besitzt. Die Folge ist, dass zum Innengewinde hin die Wandstärke dieses Schaftabschnitts zunimmt. Der Schaft hat nicht die Tendenz, im Übergangsbereich der beiden Schaftabschnitte zu deformieren; die Deformierung ist abhängig von der Stärke des Materials, in das diese Blindnietmutter eingenietet wird. Mit dieser Konstruktion wird eine geringfügige Erweiterung des Klemmbereichs erreicht; eine definierte Schließkopfbildung ergibt sich nicht. Somit verbleiben alle Probleme wie bei herkömmlichen Blindnietmuttern.

In der DE 699 17 827 T2 sind Blindnietelemente beschrieben, die als Blindnietmutter oder Blindnietgewindebolzen ausgebildet sind. Die Blindnietmutter weist in deren Verformungsabschnitt vier parallel zur Längsachse der Blindnietmutter verlaufende Schlitze und damit die vorbeschriebenen Nachteile auf. Der Blindnietgewindebolzen ist im Verformungsbereich nicht mit Schlitzen, sondern mit äußeren Rändelnuten versehen. Hierdurch ist gewährleistet, dass sich bei dem Setzen des Blindnietgewindebolzens und damit der Stauchverformung des Verformungsabschnittes die Rändelnuten im Blech im Bereich dessen Lochs zur Aufnahme des Blindnietgewindebolzens und in den an das Loch anschließenden Randbereichen des Bleches verkrallen

In der EP 1 557 577 A2 und der US 2,324,142 sind Blindnietmutter beschrieben, die quer zur Längsachse des Schafts außen am Schaft umlaufende Nuten aufweisen. Die jeweilige Blindnietmutter ist hierbei mit mindestens zwei parallel zueinander angeordneten umlaufenden Nuten versehen. Dies ermöglicht eine Verformung des Schafts ausgehend von diesen Nutbereichen, wobei bei der Blindnietmutter gemäß der US 2,324,142 eine Verformung beider benachbarter Nuten erfolgt, so dass eine Doppelwulstbildung zu verzeichnen ist.

Aufgabe der vorliegenden Erfindung ist es, ein Blindnietelement der eingangs genannten Art so weiterzubilden, dass bei diesem die Nachteile der Blindnietelemente gemäß dem erörterten Stand der Technik dadurch vermieden werden, dass die Schließkopfbildung im Verformungsabschnitt genau definiert wird und überdies hierfür nur eine geringere Schwächung der Schaftwandung erforderlich ist.

Gelöst wird die Aufgabe durch ein Blindnietelement gemäß den Merkmalen des Patentanspruchs 1. Bei diesem weist der Schaft ausschließlich in einem zentralen Umfangsbereich des Verformungsabschnitts eine Schwächung der Schaftwandung mittels mehrerer Löcher im Schaft auf, zur Ausbildung eines umlaufenden Schließkopfes in Form eines umlaufenden wulsts nach dem Verformen des Blindnietelements.

Durch die Schwächung in dem zentralen Umfangsbereich des Verformungsabschnittes wird die Wandung des Schaftes in diesem diskreten Bereich, zur Knickvorbereitung, labilisiert. Das Knicken des Verformungsabschnittes nach außen soll somit an den durch die Schwächung bestimmten Stellen beginnen. Nur in diesem zentralen Umfangsbereich erfolgt die Schwächung der Schaftwandung. In den anderen Bereichen verbleibt die Schaftwandung ungeschwächt, womit dort die gesamte Wandstärke zur Verfügung steht.

Erfindungsgemäß ist somit vorgesehen, dass die Schwächung der Schaftwandung einerseits in einem zentralen Bereich des Verformungsabschnitts, andererseits in einem Umfangsbereich des Verformungsabschnitts erfolgt. Die Schwächung erfolgt somit nicht, wie beim Stand der Technik, über die große Länge des Verformungsabschnitts, beispielsweise durch die die große Länge aufweisenden Schlitze oder über den gesamten Umfang des Verformungsabschnitts.

Da bei dem erfindungsgemäßen Blindnietelement keine langen Schlitze mit dazwischen befindlichen Stegen vorzusehen sind, kann die Blindnietmutter wesentlich kürzer bauen und weist auf eine andere Gestaltung des Wulstes auf. Der Wulst stellt sich als recht große, im Wesentlichen umlaufende Auflagefläche dar, im Unterschied zu den großen Sektorbereichen, in denen ein Blindnietelement mit in dessen Längserstreckung verlaufenden Schlitzen mit deren Schließkopf nicht am Blech anliegt. Es ist somit auch nicht die Gefahr vorhanden, dass sich das mit dem Blech verbundene Blindnietelement beim späteren Verschrauben relativ zum Blech dreht. Die Klemmkraft des genieteten Blindnietelements ist somit wesentlich höher.

Die Schwächung der Schaftwandung erfolgt über einen Teil des gesamten Umfangs der Schaftwandung, am inneren und/oder äußeren Umfang des Schafts. Nur in diesen diskreten Bereichen ist die Wandung des Schafts, zur Knickvorbereitung, labilisiert. Das Knicken der Verformungsabschnitte nach außen soll somit an den durch die Schwächung bestimmten Stellen beginnen.

Da keine langen Schlitze in Längsrichtung des Verformungsabschnitts, die sich im Wesentlichen über die Länge des Verformungsabschnitts erstrecken, erforderlich sind, kann das Blindnietelement sehr kurz bauen, bei wesentlich größerem Klemmbereich. Auf Grund des Umstandes, dass die Knickung des Blindnietelements beim Setzen in einem bestimmten Bereich des Blindnietelements beginnt, und damit eine Knickwölbung beim Setzen des Blindnietelements in Abhängigkeit von der Blechstärke eindeutig bestimmbar ist, kann das Blindnietelement präzise gesetzt werden, wobei der äußere Abstand des hierbei gebildeten Schließkopfs von der Längsachse des Schafts wesentlich geringer ist als bei der aus dem Stand der Technik bekannten Variante mit den in Längserstreckung des Schaftes verlaufenden langen Schlitzen.

Gemäß einer besonderen Ausführungsform der Erfindung ist vorgesehen, dass die Löcher den Schaft durchsetzen. Dies ist deshalb von Vorteil, weil beim Setzen des Blindnietelements die Löcher in Folge der Verformung des Schaftes Tangentialkräften unterworfen werden, die dazu führen, dass die Löcher in Tangentialrichtung in eine unrunde bzw. sogar schlitzförmige Form verformt werden. Grundsätzlich reicht es aus, wenn die Schwächung zwar durch mehrere Löcher im Schaft gebildet ist, diese Löcher aber nicht den Schaft durchsetzen, sondern die Schaftwandung in radialer Richtung schwächen. In diesem Fall würde beim Setzen des Blindnietelements und Verformung des Verformungsabschnitts die Verformung der Löcher stattfinden und hierbei dort Risse in der Schaftwandung erzeugt, mit der Folge, dass, im vorbeschriebenen Sinne, die Löcher den Schaft nunmehr durchsetzen. Beim weiteren Verformen des Verformungsabschnitts werden die den Schaft durchsetzenden Löcher weiter tangential verformt und reißen damit weiter auf.

Da es, um das erfindungsgemäße Ergebnis zu erzielen, nur darauf ankommt, den Schaft in dem definierten, zentralen Umfangsbereich des Verformungsabschnitts zu schwächen, bieten sich durchaus auch andere Möglichkeiten an, dies herbeizuführen. Es ist beispielsweise denkbar, die Schaftwandung im zentralen Wandungsbereich mittels Laser vielfach punktuell zu schwächen.

Besonders einfach und kostengünstig lässt sich das Blindnietelement herstellen, wenn der Schaft zwischen dem Setzkopf und dem Innengewinde des Schaftes einen konstanten Innen- und/oder Außendurchmesser aufweist. Im Idealfall weist der Schaft in diesem Bereich somit weder einen äußeren noch inneren Durchmessersprung auf.

Besonders vorteilhaft ist es, wenn die Löcher auf einem Umfangskreis des Schaftes angeordnet sind, dessen Kreisebene senkrecht zur Schaftlängsachse angeordnet ist. Beim Setzen des Blindnietelements werden hierdurch weitgehend identische Deformationskräfte in den Verformungsabschnitt eingeleitet.

Es reicht durchaus aus, wenn nur zwei Löcher vorgesehen sind. Vorzugsweise handelt es sich aber um drei oder mehr Löcher. Diese Löcher sind insbesondere in gleichem Abstand über den Umfang des Schaftes verteilt; bei vier Löchern schließen diese somit einen Winkel von jeweils 90° miteinander ein.

Die baulich einfachste Ausgestaltung des erfindungsgemäßen Blindnietelements ist diejenige, die Löcher aufweist, welche einen kreisrunden Querschnitt besitzen. Diese Löcher werden bei der Herstellung des Blindnietelements gestanzt oder gebohrt. Die Löcher können beispielsweise dahingehend modifiziert sein, dass sie oval oder als Langlöcher ausgebildet sind, insbesondere mit einer Erstreckung deren Hauptachse quer oder parallel zur Längsachse des Schafts. Diese Löcher sind damit nicht so länglich ausgebildet, wie Schlitze, die ein größeres Längen-Breiten-Verhältnis aufweisen. Die Löcher können durchaus tropfenförmig gestaltet sein, wobei eine Anordnung der Tropfenform als vorteilhaft angesehen wird, bei der die Tropfenspize des Tropfens in die Längsrichtung des Schafts orientiert und von dem Setzkopf weggerichtet angeordnet ist.

Es wird als vorteilhaft angesehen, wenn der Abstand des Zentrums der Löcher vom Innengewinde bzw. der Aufnahme für den Gewindebolzen etwa so groß ist wie deren Abstand vom Setzkopf.

Das Blindnietelement ist insbesondere als Blindnietmutter oder als Blindnietgewindebolzen ausgebildet.

Die Erfindung schlägt somit ein Blindnietelement mit relativ kurzer Baulänge aber besonders großem Klemmbereich vor. Das Blindnietelement weist in einem zentralen Umfangsbereich des Verformungsabschnitts, somit in Abstand zum Innengewinde bzw. der Aufnahme für den Gewindebolzen, die Schwächung der Schaftwandung auf. Mit einem erfindungsgemäßen Blindnietelement, das als Blindnietmutter ausgebildet ist, und der Aufnahme einer Schraube der Größe M8 dient, lässt sich ein Klemmbereich von 0,5 bis 7,0 mm darstellen, der somit fast dreimal so groß ist wie bei der eingangs beschriebenen Blindnietmutter. Der Schaft weist ausschließlich im zentralen Umfangsbereich des Verformungsabschnitts die Schwächung der Schaftwandung auf. Axial erstreckt sich der zentrale Umfangsbereich über eine kurze Länge des Schaftes.

Da bei dem erfindungsgemäßen Blindnietelement die Schließkopfbildung im Verformungsabschnitt genau definiert ist, ist auch nicht das bei herkömmlichen Blindnietmuttern vorhandene Problem zu verzeichnen, dass das Blindnietelement nicht festsitzt, gegebenenfalls zur Seite knickt oder gar der nach außen zu bildende Wulst sich nach innen faltet. Auf Grund der Möglichkeit, das erfindungsgemäße Blindnietelement definiert mit einem Bauteil zu vernieten, ergibt sich ein wesentlich erweiterter Anwendungsbereich des Blindnietelements. Es kann nicht nur mit nicht ausreichend festem Material, wie z. B. Plastik oder einem Material, die durch die sogenannte Sandwichbauweise verbunden werden, wobei der Schließkopf eine Wandung des Bauteils hintergreift. Nunmehr besteht auch die Möglichkeit, das Blindnietelement zum Vernieten mit einem Bauteil derart zu verwenden, dass das Blindnietelement in ein Loch des Bauteils eingesetzt ist und der nach dem Verformen des Blindnietelements gebildete Schließkopf des Blindnietelements radial in eine Ausnehmung des Bauteils eingreift. Demzufolge hintergreift bei dieser Anordnung der Schließkopf nicht mehr das Bauteil, wie bei einer üblichen Anwendung des Blindnietelements, somit an der dem Setzkopf abgewandten Wandung des Bauteils anliegend. Stattdessen ist der Schließkopf formschlüssig in der Ausnehmung des Bauteils positioniert. Diese Ausnehmung, in die der Schließkopf eingreift, kann bereits vor dem Setzen des Blindnietelements gebildet sein oder aber sich beim Setzen des Blindnietelements bilden. Im letztgenannten Fall ist vorgesehen, dass das Bauteil zumindest im Bereich des Schließkopfs verformbar ausgebildet ist und die Ausnehmung im Bauteil beim Setzen des Blindnietelements mittels des sich bildenden Schließkopfs gebildet wird. Das Material des Bauteils ist insbesondere weicher als das metallische Blindnietelement. Bei dem Bauteil kann es sich hier beispielsweise um ein solches aus Holz handeln, das demzufolge verformbar ist.

In den Figuren ist die Erfindung anhand mehrerer Ausführungsformen für unterschiedliche Verwendungen beispielsweise dargestellt, ohne hierauf beschränkt zu sein.

Es zeigt:
- Figur 1: eine Seitenansicht sowie teilweise geschnittene Ansicht einer ersten Ausführungsform des erfindungsgemäßen Blindnietelements, das als Blindnietmutter ausgebildet ist, in ein relativ dünnwandiges Bauteil eingesetzt, vor dem Setzen der Blindnietmutter, wobei das Bauteil als Blech ausgebildet ist,
- Figur 2: einen Schnitt durch die Blindnietmutter gemäß der Linie II-II in Figur 1, veranschaulicht in vergrößerter Darstel- lung der Blindnietmutter, ohne Blech,
- Figur 3: eine zweite Ausführungsform einer Blindnietmutter, in einer Darstellung gemäß Figur 1,
- Figur 4: die Blindnietmutter gemäß der ersten oder zweiten Aus- führungsform, mit dem relativ dünnwandigen Blech ver- nietet,
- Figur 5: die Blindnietmutter gemäß der ersten oder zweiten Aus- führungsform, der mit einem relativ dickwandigen Blech vernietet,
- Figur 6: eine weitere Ausführungsform einer Blindnietmutter,
- Figur 7: eine weitere Ausführungsform einer Blindnietmutter,
- Figuren 8a bis 8d: unterschiedliche Zustände einer mit einem dünnen Blech zu vernietenden Blindnietmutter in der Ausfüh- rungsform gemäß der Figur 6, veranschaulicht ausge- hend vom Einsetzen der nicht verformten Blindnietmut- ter in das Loch des dünnwandigen Bleches bis zum Zu- stand der mit dem Blech vernieteten Blindnietmutter,
- Figuren 9a bis 9d: Darstellungen die denjenigen der Figuren 8a bis 8d entsprechen, wobei das Vernieten der Blindnietmutter gemäß der Ausführungsform nach der Figur 6 mit ei- nem dickeren Blech veranschaulicht ist,
- Figur10: in einer Schnittdarstellung eine mit einem in Sandwich- form vorliegenden Bauteil vernietete erfindungsgemäße Blindnietmutter,
- Figur 11: in einem Schnitt eine Nietverbindung zwischen der er- findungsgemäßen Blindnietmutter und einer Bauteilan- ordnung, die durch ein Kunststoffbauteil und ein Metall- bauteil gebildet ist,
- Figur 12: eine Seitenansicht sowie teilweise geschnittene Ansicht eines erfindungsgemäßen Blindnietelements, das als Blindnietgewindebolzen ausgebildet ist, in einer Darstel- lung entsprechend der Darstellung der Blindnietmutter gemäß Figur 1, allerdings ohne Blech veranschaulicht,
- Figur 13: den in Figur 12 veranschaulichten Blindnietgewindebol- zen, der mit einem relativ dickwandigen Blech vernietet ist,
- Figur 14: eine alternative Verwendung eines Blindnietelements, das im Ausführungsbeispiel als Blindnietmutter ausge- bildet ist, wobei das Blindnietelement in das verformbar gestaltete Bauteil eingesetzt ist und der beim Setzen erzeugte Schließkopf in eine radiale Ausnehmung des Bauteils eingreift.

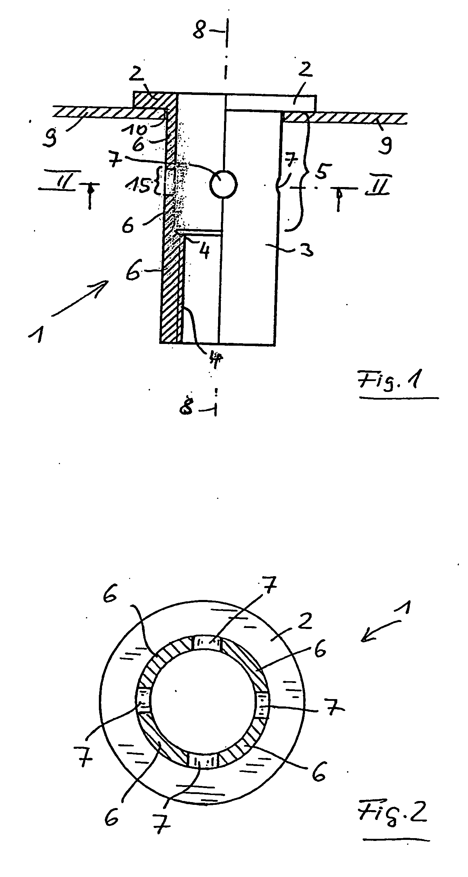

Die Figuren 1 und 2 veranschaulichen für die erste Ausführungsform der Erfindung die Blindnietmutter 1, bevor sie gesetzt wird. Die Blindnietmutter 1 weist einen Setzkopf 2 und einen Schaft 3 auf. Der Schaft 3 ist im Bereich seines dem Setzkopf 2 abgewandten Endes mit einem Innengewinde 4 und zwischen dem Innengewinde 4 und dem Setzkopf 2 mit einem Verformungsabschnitt 5 versehen. Grundsätzlich reicht dieser Verformungsabschnitt 5 bis zum Setzkopf 2, da sich die Blindnietmutter 1 in diesem Bereich bei Einleitung einer Zugkraft in das Innengewinde 4 verformen könnte. In der Praxis, da die Blindnietmutter mit einem plattenförmigen Bauteil 9, insbesondere einem Blech 9 zu verbinden ist, reicht dieser Verformungsabschnitt 5 nur bis zu der dem Setzkopf 2 abgewandten Seite des Bleches.

Der Schaft 3 weist in einem zentralen Bereich des Verformungsabschnitts 5, über den Umfang des Schaftes 3, eine Schwächung der Schaftwandung 6 auf. Diese Schwächung ist durch vier den Schaft 3 radial durchsetzende Löcher 7 kreisförmigen Querschnitts gebildet. Die Löcher 7 sind auf einem Umfangskreis des Schaftes 3 angeordnet, dessen Kreisebene der Schnittebene gemäß der Linie II-II in Figur 1 entspricht, somit senkrecht zur Schaftlängsachse 8 angeordnet ist. Die Löcher 7 sind gleichmäßig am Umfang des Schaftes 3 angeordnet, deren Lochmittelpunkte schließen somit jeweils einen Winkel von 90° miteinander ein. In Achsrichtung des Schaftes 3 erstreckt sich der zentrale, geschwächte Umfangsbereich 15 somit entsprechend der Erstreckung der Löcher 7 in Richtung der Schaftlängsachse 8, wobei die Schwächung des Schafts 3 über dessen Umfang auf Grund der am Umfang angeordneten mehreren Löcher 7 erfolgt.

Der Außendurchmesser des Schaftes 3 ist konstant. Auch der Innendurchmesser des Schaftes 3 im Bereich des Verformungsabschnittes 5 ist konstant und entspricht dem Innendurchmesser des Setzkopfes 2. Der Abstand der Löcher 7 vom Innengewinde 4 ist kleiner als der Abstand der Löcher 7 vom Setzkopf 2.

Konkret ergeben sich beispielsweise für eine erfindungsgemäße Blindnietmutter 1, deren Innengewinde 4 der Aufnahme einer Schraube M8 dient, folgende Abmessungen:
- Außendurchmesser des Schaftes 3: 11,0 mm
- Innendurchmesser des Schaftes 3: 9,5 mm
- Abstand Schaft zu Innengewinde: 10,0 mm
- Abstand Schaft zur Mitte des jeweiligen Loches: 6,0 mm
- Durchmesser des jeweiligen Loches: 1,5 mm

Die genannten Abmessungen der Blindnietmutter beziehen sich insbesondere auf die Befestigung der Blindnietmutter an einem Blech mit einer Wandstärke von 0,5 bis 7 mm. Sind Blindnietmuttern beispielsweise für Schrauben der Stärke M8 mit dickeren Blechen zu verbinden, ist es nur erforderlich, Blindnietmuttern mit anderen Längenabstufungen vorzuhalten.

Figur 1 zeigt die Blindnietmutter 1, die durch ein Kreisquerschnitt aufweisendes Loch 10 im Blech 9 gesteckt ist. Der Außendurchmesser des Schaftes 3 der Blindnietmutter 1 ist geringfügig geringer als der Durchmesser des Loches 10. Die Blindnietmutter 1 liegt mit ihrem Setzkopf 2 am Blech 9 an. Es wird dann ein nicht gezeigter Gewindedorn in das Innengewinde 4 eingeschraubt und die Blindnietmutter 1 mittels eines Blindnietmutter-Setzgerätes befestigt, wie es beispielsweise in der DE 198 08 685 A1 beschrieben ist.

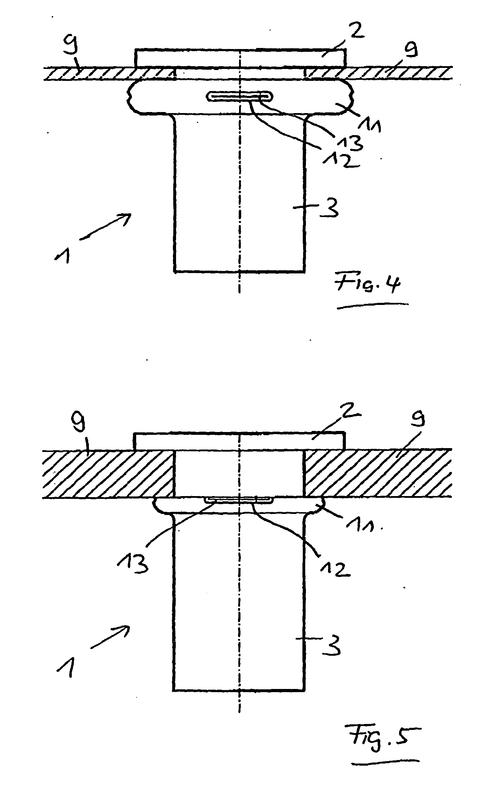

In einem Zwischenzustand beim Setzen der Blindnietmutter 1 wird der Setzkopf 2 mittels des Blindnietmutter-Setzgerätes gegen das Blech 9 gedrückt und es zieht der Gewindedorn, der in das Innengewinde eingeschraubt ist, den Bereich des Schaftes 3, der das Innengewinde 4 aufweist, in Richtung des Bleches 9 bzw. des Setzkopfes 2. Hierbei verformt sich auf Grund der im Bereich der Löcher 7 ausgebildeten Schwächung der Schaftwandung 6 der im Bereich der Löcher 7 gebildete zentrale Längsbereich 12 der Schaftwandung 6 nach außen, womit konkret im Bereich dieser Schwächung des Schaftes 3 somit über die kurze axiale Länge des Schaftes 3 eine Verformung des Schaftes 3 beginnt. Wird das Innengewinde 4 mittels des Gewindedorns weiter in Richtung des Bleches 9 gezogen, ergibt sich die in Figur 4 veranschaulichte Situation, in der durch vollständige Verformung des Verformungsabschnitts 5, bis auf den Bereich, der der Wandstärke des Bleches 9 entspricht, der Schließkopf 11 ausgebildet ist. Im Falle des relativ dünnwandigen Bleches 9 ist der Schließkopf 11 stark ausgeprägt, d. h. es weist dieser einen großen Durchmesser und eine große Stärke auf, da sich die Blindnietmutter 1 beim Nietvorgang über die relativ große Länge des Verformungsabschnitts 5 verformen kann. Der Schließkopf 11 ist umlaufend ausgebildet, wobei im Bereich des jeweiligen, zuvor vorhandenen Loches 7 ein umlaufender Wulst 11 ausgebildet ist, wobei zwischen pa-rallelen Wulstwandungen des jeweiligen Wulstes 11 eine geschlossene, längliche, quer zur Längserstreckung des Schaftes 3 verlaufende, somit tangential verlaufende Schlitzkontur 13 des zuvor die Schaftwandung 6 durchsetzenden Loches 7 gebildet ist. Im Fall des relativ dünnwandigen Bleches erstreckt sich diese Schlitzkontur 13 etwa im Bereich der halben Stärke des Schließkopfes 11, bezogen auf dessen Erstreckung in Richtung der Schaftlängsachse 8.

Bei Verwendung eines relativ dünnwandigen Bleches kann sich der Verformungsabschnitt 5 durchaus soweit verformen, dass der Durchmesser des

Schließkopfes 11 so groß, gegebenenfalls größer ist als der Durchmesser des Setzkopfes 2.

Figur 5 veranschaulicht die Verhältnisse einer identischen Blindnietmutter 1, die mit einem relativ dickwandigen Blech 9 vernietet ist. Diese Figur zeigt, dass sich auf Grund der Blechstärke nur ein relativ kleiner Schließkopf 11 ausbildet. Dieser weist sowohl einen relativ geringen Durchmesser als auch eine relativ geringe Stärke auf. Da nur über eine relativ geringe Erstreckung des Verformungsabschnitts 5 in Richtung der Schaftlängsachse 8 eine Verformung des Verformungsabschnitts 5 möglich ist und die Verformung nach wie vor von dem Bereich der Blindnietmutter 1 ausgeht, dem die Löcher 7 zugeordnet sind, befindet sich der Wulst 11, der bei der Verformung der Löcher 7 beim Nieten entsteht, näher der Anlagefläche des Wulstes 11 am relativ dünnwandigen Blech 9.

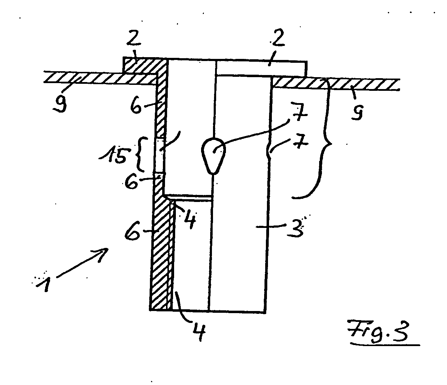

Figur 3 zeigt eine gegenüber der Ausführungsform nach den Figuren 1 und 2 modifizierte Gestaltung der Blindnietmutter 1. Diese unterscheidet sich von der Ausführungsform nach den Figuren 1 und 2 nur dadurch, dass statt vier Löchern 7 mit kreisförmigem Querschnitt vier Löcher 7 mit tropfenförmigem Querschnitt vorgesehen sind, wobei die Tropfenspitze in Richtung der Schaftlängsachse 8 orientiert und vom Setzkopf 2 weggerichtet angeordnet ist. Beim Vernieten einer Blindnietmutter gemäß der Ausführungsform nach der Figur 3 ergibt sich, sowohl bei einem relativ dünnwandigen Blech gemäß der Figur 4 als auch einem dickwandigen Blech gemäß der Figur 5 die vernietete Situation, wie sie in den Figuren 4 und 5 für die unterschiedlichen Blechstärken dargestellt ist. Somit wird beim Vernieten der Blindnietmutter 1, die gemäß der Ausführungsform nach der Figur 3 gestaltet ist, das tropfenförmige Loch 7 gleichfalls in eine Schlitzform verformt.

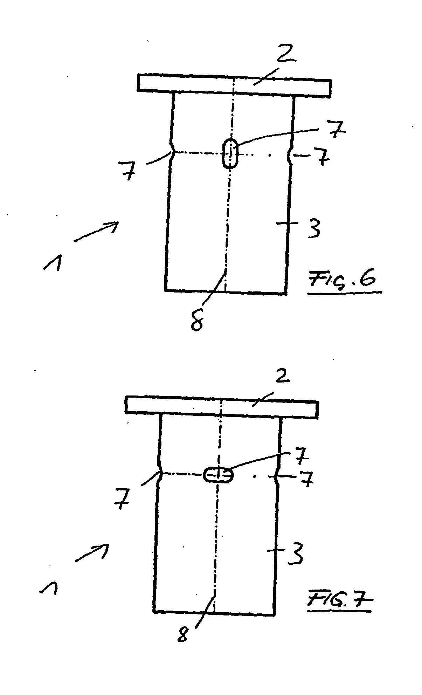

Die Blindnietmutter 1 gemäß der Ausführungsform nach Figur 6 ist gegenüber der nach den Figuren 1 und 2 nur dahingehend modifiziert, dass statt der Löcher 7 mit dem kreisförmigen Querschnitt Löcher 7 vorgesehen sind, die als Langlöcher ausgebildet sind, wobei die Längsachse der Langlöcher parallel zur Längsachse 8 des Schaftes 3 verläuft.

Die Ausführungsform nach der Figur 7 unterscheidet sich von derjenigen nach der Figur 6 nur dadurch, dass die Längsachsen der Langlöcher 7 quer zur Längsachse 8 des Schafts 3 verlaufen.

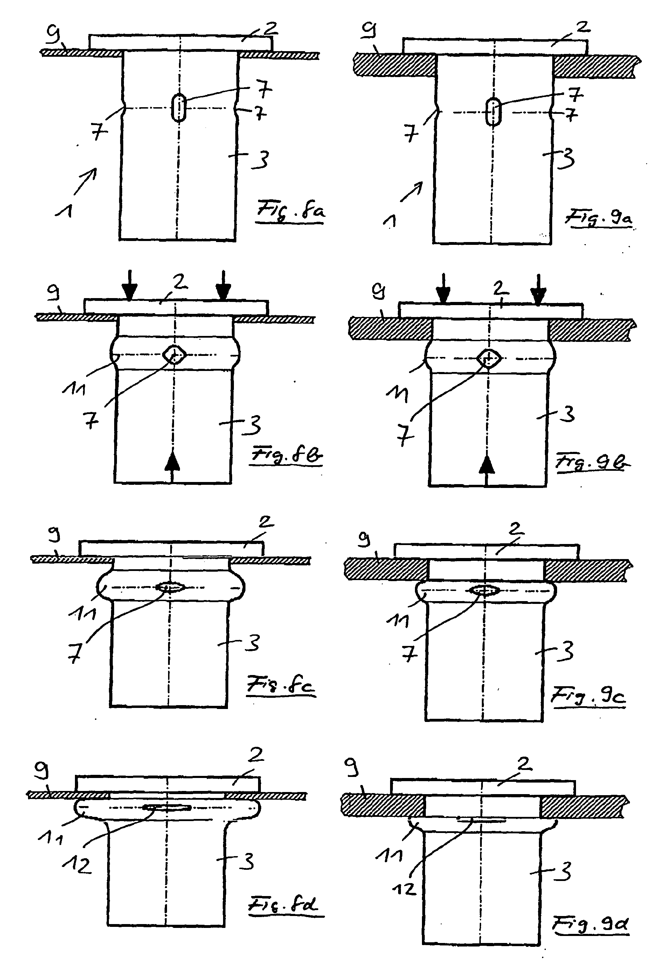

Die Figuren 8a bis 8d veranschaulichen Abläufe beim Vernieten einer gemäß der Ausführungsform nach der Figur 6 ausgebildeten Blindnietmutter 1 mit einem dünnwandigen Blech 9. Figur 8a zeigt die in das Loch des Bleches 9 eingesetzte Blindnietmutter 1, wobei der Setzkopf 2 der Blindnietmutter 1 am Blech 9 anliegt. Im Sinne der in Figur 8 veranschaulichten Doppelpfeile wird mittels eines geeigneten Werkzeuges der Setzkopf 2 gegen das Blech 9 gedrückt, so dass der Setzkopf 2 während des Nietvorganges am Blech 9 anliegt. Die Blindnietmutter wird mittels eines geeigneten Werkzeuges, das einen rotierbaren und axial verschiebbaren Gewindedorn aufweist, vernietet. Hierzu wird der Gewindedorn von der Setzkopfseite her in das Innengewinde 4 der Blindnietmutter 1 geschraubt und dann in Richtung des weiteren, einzelnen Pfeiles gemäß Figur 8b axial so verschoben, dass eine Stauchung des Verformungsabschnitts 5 erfolgt. Auf Grund der Labilisierung des Schaftes 3 der Blindnietmutter 1 in einem definierten Bereich des Verformungsabschnitts 5, konkret im Bereich der Löcher 7, bildet sich dort zu Beginn des Nietvorgangs der Wulst 11 und erstreckt sich beim weiteren Axialverschieben des Gewindedorns weiter in Richtung des Setzkopfes 2 und des dem Setzkopf 2 abgewandten Endes des Schaftes 3, wie es für diesen Zwischenschritt in der Figur 8b veranschaulicht ist. Wird der Gewindedorn weiter axial verschoben, verstärkt sich die Wulstausbildung, womit sich die Löcher 7, wie es anschaulich der Figur 8c zu entnehmen ist, in Tangentialrichtung des Wulstes strecken, somit im Sinne eines länglichen Schlitzes verformen. Figur 8d zeigt die Blindnietmutter 1 nach Abschluss des Nietvorgangs. Das relativ dünnwandige Blech 9 ist zwischen dem Setzkopf 2 und dem Schließkopf 11 geklemmt. Deutlich ist die schlitzförmige Ausbildung des Wulstes zu entnehmen.

Die Figuren 9a bis 9d zeigen, entsprechend der Darstellung der Figuren 8a bis 8d, axiale Verfahrschritte des Gewindedorns beim Vernieten einer entsprechenden Blindnietmutter 1, somit einer Blindnietmutter gemäß der Ausführungs-form nach der Figur 6, allerdings beim Vernieten mit einem dickwandigeren Blech 9. Insbesondere der Darstellung der Figuren 9b und 9c ist zu entnehmen, dass der gebildete Wulst 11 wesentlich früher als bei einem dünnwandigen Blech am Blech 9 anliegt und, wie insbesondere der Darstellung der Figur 9d zu entnehmen ist, die Schließkopfausbildung wesentlich weniger voluminös ist als bei dem Vernieten der Blindnietmutter mit einem dünnwandigen Blech 9.

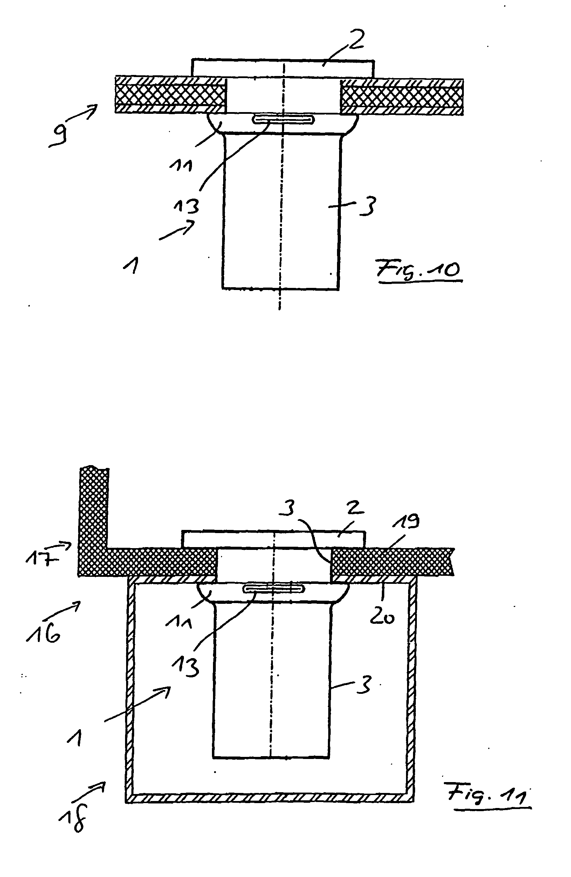

Figur 10 veranschaulicht eine Blindnietmutter 1, die nicht mit einem Blech 9, sondern mit einem Bauteil 9, das in Sandwichbauweise gestaltet ist, vernietet ist. Dieses Bauteil 9 ist durch zwei äußere Aluminiumbleche und eine zwischen diesen angeordnete Schaumstoffplatte, wobei die drei Lagen einen Verbund darstellen, gebildet.

Figur 11 zeigt eine Blindnietmutter 1, die mit einer Bauteilanordnung 16 vernietet ist. Diese Bauteilanordnung besteht aus einem Kunststoffteil 17 und einem Metallprofil, wobei der Schaft 3 der Blindnietmutter 1 fluchtende Löcher in aneinander anliegenden Wandabschnitten 19 und 20 von Kunststoffteil 17 bzw. Metallprofil 18 durchsetzt. In diesem Fall dient die Blindnietmutter 1 zusätzlich dem Verbinden von Kunststoffteilen 17 und Metallprofil 18.

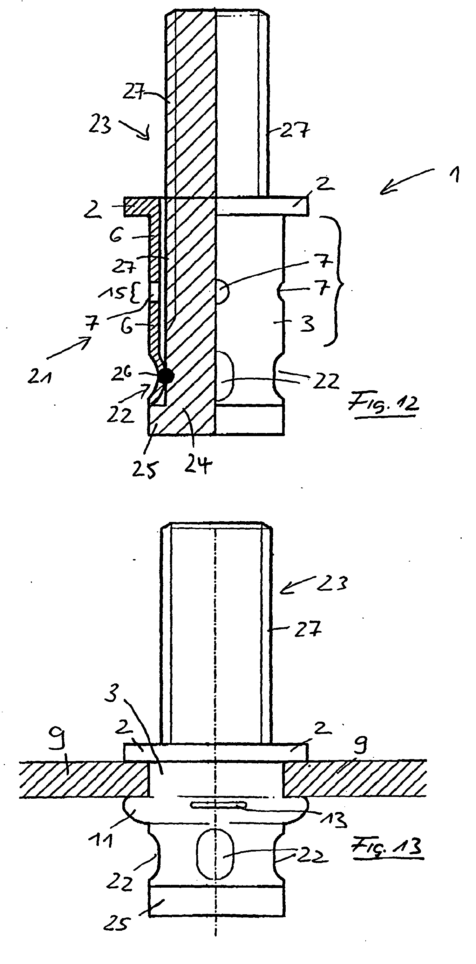

Figur 12 zeigt ein Blindnietelement, das als Blindnietgewindebolzen 21 ausgebildet ist. Bezogen auf die erfindungsrelevanten Merkmale ist der Blindnietgewindebolzen entsprechend der vorstehend beschriebenen Blindnietmutter 1 ausgebildet, wobei der Blindnietgewindebolzen 21 entsprechend den beschriebenen diversen Ausführungsformen der Blindnietmutter 1 modifiziert sein kann. Zur Vermeidung von Wiederholungen wird insofern auf die vorstehenden Figurenbeschreibungen verwiesen.

Der Blindnietgewindebolzen 21 weist somit den Setzkopf 2, den Schaft 3, den Verformungsabschnitt 5 sowie die im Ausführungsbeispiel vorgesehenen, vier kreisrunden Löcher 7 und den durch diese Löcher definierten Umfangsbereich 15 auf. Statt des Gewindes 4 bei der Blindnietmutter 1 weist der Schaft 3 des Blindnietgewindebolzens 21 im Bereich seines dem Setzkopf 2 abgewandten Endes in herkömmlicher Art und Weise eine Aufnahme 22 für einen Gewindebolzen 23 auf. Dieser Gewindebolzen 23 weist einen gewindelosen, gestuften Endabschnitt 24 auf, dessen erweiterter Bereich 25 die Aufnahme 22 des Schaftes 3 kontaktiert. Entsprechend der Anordnung der vier Löcher 7 im Bereich des Verformungsabschnitts 5 des Schaftes 3 weist der Schaft 3 im Bereich der Aufnahme 22 radial nach innen gewölbte Bereiche auf, die den Endabschnitt 24 des Gewindebolzens 23 im Bereich des reduzierten Durchmessers des Endabschnitts 24 kontaktieren. Dort ist der Schaft 3 mit dem Gewindebolzen 23 verschweißt, für einen der vier Schweißbereiche ist die Schweißung durch einen Punkt 26 veranschaulicht. Der mit dem Schaft 3 verschweißte Gewindebolzen 23 weist, abgesehen von seinem Bereich des Endabschnitts 24, ein Außengewinde 27 auf, auf das, zum Setzen des Blindnietgewindebolzens, ein geeignetes Werkzeug mit einer axial verschiebbaren Mutter aufschraubbar ist.

Figur 13 zeigt den Gewindebolzen 23, der mit einem relativ dickwandigen Blech 9 vernietet ist.

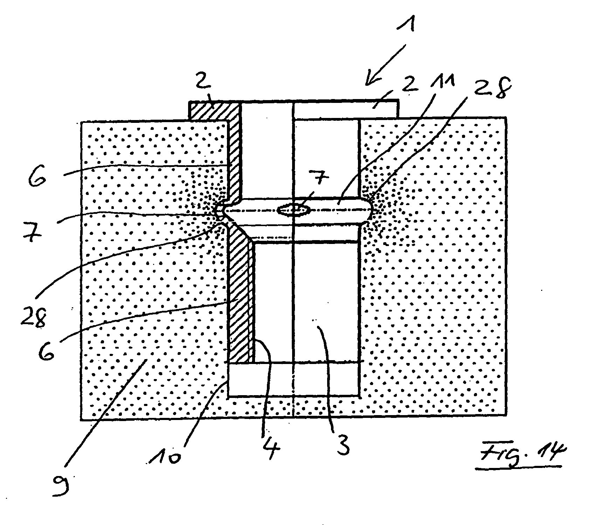

Figur 14 zeigt eine neue Verwendung eines Blindnietelements, das im Ausführungsbeispiel als Blindnietmutter 1 ausgebildet ist, durchaus aber auch ein Blindnietgewindebolzen 21 sein kann.

Veranschaulicht ist in Figur 14 das dickwandige Bauteil 9, wobei das Material des Bauteils 9 weicher ist als Metall. Das Bauteil 9 besteht beispielsweise aus Holz. Das Bauteil 9 ist mit dem Loch 10, das beispielsweise als Sackloch ausgebildet ist, versehen. Die Tiefe des Loches 10 ist größer als die Längserstreckung der Blindnietmutter 1. Die Blindnietmutter 1 wird in das Loch 7 eingesteckt und der zu den Figuren 8a bis 8d beschriebene Setzvorgang vollführt. So wird der Setzkopf 2 gegen das Bauteil 9 gedrückt und der in das Innengewinde 4 der Blindnietmutter 1 eingeschraubte Gewindedorn axial verschoben, womit sich die Blindnietmutter 1 auf Grund der Labiliserung durch die Löcher 7 definiert verformt. Die Verformung führt zur radial nach außen gerichteten Ausbildung des Wulstes, mit der Konsequenz, dass der Wulst - Schließkopf 11 - das aus weicherem Material als die metallische Blindnietmutter 1 bestehende Bauteil 9 verformt, so dass der Schließkopf radial in die so gebildete Ausnehmung 28 des Bauteils 9 eingreift. Die Blindnietmutter 1 ist somit formschlüssig im Bauteil 9 gehalten.

Figur 14 veranschaulicht eine Modifizierung der Blindnietmutter dahingehend, dass sie länger ausgebildet ist und die Löcher 7 in größerem Abstand zum Setzkopf 2 angeordnet sind.

## Patentansprüche

1. Blindnietelement (1, 21) mit einem Setzkopf (2) und einem Schaft (3), wobei der Schaft (3) im Bereich seines dem Setzkopf (2) abgewandten Endes ein Innengewinde (4) oder eine Aufnahme (22) für einen Gewindebolzen (23) und zwischen dem Innengewinde (4) bzw. der Aufnahme (22) für den Gewindebolzen (23) und dem Setzkopf (2) einen Verformungsabschnitt (5) aufweist, sowie der Setzkopf (2) einen größeren Außendurchmesser als der Schaft (3) besitzt, **dadurch gekennzeichnet, dass** der Schaft (3) ausschließlich in einem zentralen Umfangsbereich (15) des Verformungsabschnitts (5) eine Schwächung der Schaftwandung (6) mittels mehrerer Löcher (7) im Schaft (3) aufweist, zur Ausbildung eines umlaufenden Schließkopfes (11) in Form eines umlaufenden Wulsts (11) nach dem Verformen des Blindnietelements (1, 21).

2. Blindnietelement nach Anspruch 1, **dadurch gekennzeichnet, dass** die Löcher (7) den Schaft (3) durchsetzen.

3. Blindnietelement nach einem der Ansprüche 1 bis 2, **dadurch gekennzeichnet, dass** der Schaft (3) zwischen dem Setzkopf (2) und dem Innengewinde (4) des Schafts (3) bzw. der Aufnahme (22) für den Gewindebolzen (23) einen konstanten Innen- und/oder Außendurchmesser aufweist.

4. Blindnietelement nach einem der Ansprüche 1 bis 3, **dadurch gekennzeichnet, dass** die Löcher (7) auf einem Umfangskreis des Schafts (3) angeordnet sind, dessen Kreisebene senkrecht zur Schaftlängsachse (8) angeordnet ist.

5. Blindnietelement nach einem der Ansprüche 1 bis 4, **dadurch gekennzeichnet, dass** mindestens zwei Löcher (7) vorgesehen sind, vorzugsweise mindestens drei Löcher (7) vorgesehen sind.

6. Blindnietelement nach einem der Ansprüche 1 bis 5, **dadurch gekennzeichnet, dass** die Löcher (7) kreisrunden Querschnitt besitzen.

7. Blindnietelement nach einem der Ansprüche 1 bis 6, **dadurch gekennzeichnet, dass** der Abstand der Schwächung vom Innengewinde (4) bzw. der Aufnahme (22) für den Gewindebolzen (23) kleiner ist als der Abstand vom Setzkopf (2).

8. Blindnietelement nach einem der Ansprüche 1 bis 7, **dadurch gekennzeichnet, dass** es aus Metall besteht.

9. Blindnietelement nach einem der Ansprüche 1 bis 8, **dadurch gekennzeichnet, dass** es als Blindnietmutter (1) oder als Blindnietgewindebolzen (21) ausgebildet ist.

10. Verwendung eines Blindnietelements (1, 21) gemäß einem der Ansprüche 1 bis 9, insbesondere einer Blindnietmutter (1) oder eines Blindnietgewindebolzens (21) zum Vernieten mit einem Bauteil (9), wobei das Blindnietelement (1,21) in ein Loch (10) des Bauteils (9) eingesetzt ist und der nach dem Verformen des Blindnietelements (1, 21) gebildete Schließkopf (11) des Blindnietelements (1, 21) radial in eine Ausnehmung (28) des Bauteils (9) eingreift.

11. Verwendung nach Anspruch 10, wobei das Bauteil (9) zumindest im Bereich des Schließkopfes (11) verformbar ausgebildet ist und die Ausnehmung (28) im Bauteil (9) beim Setzen des Blindnietelements (1, 21) mittels des sich bildenden Schließkopfes (11) gebildet wird.

## Claims

1. Blind rivet element (1, 21) with a setting head (2) and with a shank (3), the shank (3) having, in the region of its end facing away from the setting head (2), an internal thread (4) or a receptacle (22) for a threaded bolt (23) and, between the internal thread (4) or the receptacle (22) for the threaded bolt (23) and the setting head (2), a deformation portion (5), and the setting head (2) possessing a larger outside diameter than the shank (3), **characterized in that** the shank (3), solely in a central circumferential region (15) of the deformation portion (5), has a weakening of the shank wall (6) as a result of a plurality of holes (7) in the shank (3), for the formation of a continuous closing head (11) in the form of a continuous bead (12) following deformation of the blind rivet element (1, 21).

2. Blind rivet element according to Claim 1, **characterized in that** the holes (7) pass through the shank (3).

3. Blind rivet element according to either of Claims 1 and 2, **characterized in that** the shank (3) has a constant inside and/or outside diameter between the setting head (2) and the internal thread (4) of the shank (3) or the receptacle (22) for the threaded bolt (23).

4. Blind rivet element according to one of Claims 1 to 3, **characterized in that** the holes (7) are arranged on a circumferential circle of the shank (3), the circle plane of which is arranged perpendicularly to the shank longitudinal axis (8).

5. Blind rivet element according to one of Claims 1 to 4, **characterized in that** at least two holes (7) are provided, preferably at least three holes (7) are provided.

6. Blind rivet element according to one of Claims 1 to 5, **characterized in that** the holes (7) possess a circular cross section.

7. Blind rivet element according to one of Claims 1 to 6, **characterized in that** the distance of the weakening from the internal thread (4) or the receptacle (22) for the threaded bolt (23) is smaller than the distance from the setting head (2).

8. Blind rivet element according to one of Claims 1 to 7, **characterized in that** it consists of metal.

9. Blind rivet element according to one of Claims 1 to 8, **characterized in that** it is designed as a blind-rivet nut (1) or as a blind-rivet threaded bolt (21).

10. Use of a blind rivet element (1, 21) according to one of Claims 1 to 9, in particular a blind-rivet nut (1) or a blind-rivet threaded bolt (21), for riveting to a component (9), the blind rivet element (1, 21) being inserted into a hole (10) of the component (9) and the closing head (11), formed after the deformation of the blind rivet element (1, 21), of the blind rivet element (1, 21) engaging radially into a recess (28) of the component (9).

11. Use according to Claim 10, the component (9) being designed to be deformable at least in the region of the closing head (11), and the recess (28) in the component (9) being formed, during the setting of the blind rivet element (1, 21), by means of the closing head (11) which is formed.

## Revendications

1. Elément de rivet aveugle (1, 21) avec une tête de pose (2) et une tige (3), dans lequel la tige (3) présente dans la région de son extrémité opposée à la tête de pose (2) un filet intérieur (4) ou un logement (22) destiné à un boulon fileté (23) et une partie déformable (5) entre le filet intérieur (4) ou le logement (22) destiné au boulon fileté (23) et la tête de pose (2), et la tête de pose (2) présente un plus grand diamètre extérieur que la tige (3), **caractérisé en ce que** la tige (3) présente, exclusivement dans une région périphérique centrale (15) de la partie déformable (5), un affaiblissement de la paroi de la tige (6) au moyen de plusieurs trous (7) dans la tige (3), pour la formation d'une tête de fermeture périphérique (11) en forme de bourrelet périphérique (11) après la déformation de l'élément de rivet aveugle (1, 21).

2. Elément de rivet aveugle selon la revendication 1, **caractérisé en ce que** les trous (7) traversent la tige (3).

3. Elément de rivet aveugle selon l'une quelconque des revendications 1 à 2, **caractérisé en ce que** la tige (3) présente un diamètre intérieur et/ou extérieur constant entre la tête de pose (2) et le filet intérieur (4) de la tige (3) ou le logement (22) destiné au boulon fileté (23).

4. Elément de rivet aveugle selon l'une quelconque des revendications 1 à 3, **caractérisé en ce que** les trous (7) sont disposés sur un cercle périphérique de la tige (3), dont le plan de cercle est disposé perpendiculairement à l'axe longitudinal (8) de la tige.

5. Elément de rivet aveugle selon l'une quelconque des revendications 1 à 4, **caractérisé en ce qu'**il est prévu au moins deux trous (7), de préférence au moins trois trous (7).

6. Elément de rivet aveugle selon l'une quelconque des revendications 1 à 5, **caractérisé en ce que** les trous (7) présentent une section transversale circulaire.

7. Elément de rivet aveugle selon l'une quelconque des revendications 1 à 6, **caractérisé en ce que** la distance entre l'affaiblissement et le filet intérieur (4) ou le logement (22) destiné au boulon fileté (23) est plus petite que la distance par rapport à la tête de pose (2).

8. Elément de rivet aveugle selon l'une quelconque des revendications 1 à 7, **caractérisé en ce qu'**il est constitué de métal.

9. Elément de rivet aveugle selon l'une quelconque des revendications 1 à 8, **caractérisé en ce qu'**il est réalisé sous forme d'écrou de rivet aveugle (1) ou de boulon fileté de rivet aveugle (21).

10. Utilisation d'un élément de rivet aveugle (1, 21) selon l'une quelconque des revendications 1 à 9, en particulier d'un écrou de rivet aveugle (1) ou d'un boulon fileté de rivet aveugle (21) pour le rivetage avec un composant (9), dans laquelle l'élément de rivet aveugle (1, 21) est introduit dans un trou (10) du composant (9) et la tête de fermeture (11) de l'élément de rivet aveugle (1, 21), formée après la déformation de l'élément de rivet aveugle (1, 21), s'engage radialement dans un évidement (28) du composant (9).

11. Utilisation selon la revendication 10, dans laquelle le composant (9) est déformable au moins dans la région de la tête de fermeture (11) et l'évidement (28) dans le composant (9) est formé au moyen de la tête de fermeture (11) qui se forme lors de la pose de l'élément de rivet aveugle (1, 21).
